# EUROPEAN PATENT APPLICATION

(11) **EP 4 726 743 A1**
(43) Date of publication of application: **15.04.2026**
(21) Application number: 25208148.4
(22) Date of filing: 10.10.2025
(51) Int. Cl.: H01B 7/18, F16L 1/11, H02G 9/06

(54) **COMPACT REINFORCED METALLIC TRACER WIRE ELEMENT AND METHODS OF MAKING SAME**

(30) Priority: 10.10.2024 US 202463705901 P
(71) Applicant: Neptco Inc., Pawtucket, RI 02861 (US)
(72) Inventor: SYLVIA, Joseph, Westwood, 02090 (US); TIBERIO, Patrick, Westwood, 02090 (US); HONEYCUTT, Jamie, Westwood, 02090 (US); RANDALL, Jason, Westwood, 02090 (US)
(74) Representative: Slingsby Partners LLP

(57) **Abstract**

The present disclosure relates to a tracer wire element that includes unidirectional fiber strands for use in e.g., micro-duct installations and other small diameter direct-bury applications for detection of underground utility lines or routes.

## Description

### RELATED APPLICATIONS

This application claims priority to U.S. Provisional Application Number 63/705,901, filed on October 10, 2024. The entire contents of which is hereby incorporated by reference in its entirety.

### TECHNICAL FIELD

The present disclosure relates in general to a tracer wire element that is used for underground detection applications and methods useful for making the same.

### BACKGROUND

Buried dielectric cables are a type of communications or transmissions cable that is manufactured for installation under the ground and in direct contact with the earth without any covering, sheathing, or piping to protect the cable, making it difficult to locate and more susceptible to being cut during installation, back filling, digging or excavation. Therefore, a tracer wire element is useful in locating these buried cables.

### SUMMARY

In one general aspect, this disclosure relates to a tracer wire element comprising a metallic wire reinforced with unidirectional fibers strands and a resin component protected by a tin coating on the wire and encased in high density polyethylene (HDPE).

In one general aspect, a tracer wire element comprises: a metallic wire configured to conduct an electrical signal for detection by an aboveground signal detector; a protective coating formed over the metallic wire; unidirectional fiber strands with a resin component reinforcement; and an outer jacket covering the unidirectional fiber strands. In some implementations, the fiber strands are flexible, cut resistant, water swellable, or a combination thereof. In some implementations, the outer jacket comprises a high-density polyethylene (HDPE). In some implementations, the HDPE is abrasion resistant. In some implementations, the cross-section of the tracer wire element is circular or oval.

In some implementations, the diameter of the tracer wire element is 1mm to 5mm. In some implementations, the diameter of the tracer wire element is 1.5mm to 4mm. In some implementations, the diameter of the tracer wire element is 2mm to 4mm. In some implementations, the diameter of the tracer wire element is less than 4mm or less than 5mm.

In some implementations, the metallic wire is a copper wire.

In some implementations, the copper wire has a gauge size of 8AWG-32AWG.

In some implementations, the unidirectional fiber strands comprise yarn strands.

In some implementations, the unidirectional fiber strands comprise polyethylene terephthalate (PET), polypropylene, polyethylene, nylon, or any combination thereof.

In some implementations, the yarn strands have a denier range of 200 denier to 5500 denier, 250 denier to 5000 denier, 250 denier to 4500 denier, 250 denier to 4000 denier, 250 denier to 3500 denier, or 300 or 3000 denier.

In some implementations, the yarn fiber strands comprise two to ten yarn strands, two to eight yarn strands, or two to seven yarn strands.

In some implementations, the resin component is formed using a hot melt pump.

In some implementations, the resin component comprises an ethylene vinyl acetate (EVA) copolymer or other synthetic copolymer.

In some implementations, the outer jacket is 0.015 inches to 0.04 inches in thickness.

In some implementations, the tracer wire element comprises an inner insulating jacket formed between the coated metallic wire and under the unidirectional fiber strands.

In some implementations, the inner jacket is a high-density polyethylene jacket.

In some implementations, the inner insulating jacket is 0.004 inches to 0.008 inches in thickness.

In some implementations, the protective coating formed over the wire comprises a metal coating comprising tin, silver, nickel, and/or zinc. In some implementations, the plurality of fibers, for example the unidirectional fiber strands and/or the yarn strands, can include at least one of: polyethylene terephthalate (PET), polypropylene, polyethylene, and nylon.

The tracer wire element may be constructed and arranged for installation in an area of or along underground routes of micro-ducts or utility delivery lines of a utility distribution system, the utility delivery lines including at least one of communication cable, fiber optic, cable gas lines, electrical lines, water lines and/or sewage lines.

The details of one or more embodiments of the subject matter of this specification are set forth in the accompanying drawings and the description below. Other features, aspects and advantages of the subject matter will become apparent from the description, the drawings, and the claims.

### BRIEF DESCRIPTION OF THE DRAWINGS

FIG 1 is an environmental diagram of an embodiment of the tracer wire element within a micro-duct.
FIG 2 is a block diagram illustrating the system and associated method of the present disclosure.
FIG 3 is a perspective view of a portion of the system illustrated in FIG 2 and, in particular, at the forming apparatus.
FIG 4 is a cross-sectional view of the forming apparatus.
FIG 5 is a further detailed view of a forming arrangement for further shaping the tracer wire element.
FIG. 6 is a perspective view of a tracer wire element of the present disclosure.
FIG 7 is a cross-sectional view of a tracer wire element of the present disclosure.
FIG. 8 is a perspective view of a tracer wire element of the present disclosure.
FIG. 9 is a cross-sectional view of a tracer wire element of the present disclosure.

### DETAILED DESCRIPTION

This disclosure describes a tracer wire element for use primarily in micro-duct installations and other small diameter buried dielectric cable applications for detection of underground utility lines or routes. In general, a tracer wire element is a single conductor wire, with various protective coverings, laid along pipes and other underground utilities to help enhance detection of the placement and location of buried dielectric cables for field repair, installation, or removal and replacement. The tracer wire element can be placed within micro-ducts, providing very precise dimensional control, while remaining resistant to impact and other cable installation and removal forces. A micro-duct is a small diameter, flexible duct designed to provide paths for placing optical fibers, telecommunications cables, etc.

In some implementations, the tracer wire element is compact, e.g., less than 5 millimeters (mm) in diameter, less than 4 mm in diameter, less than 3.5 mm in diameter, or less than 2.5 mm in diameter. In some implementations, the tracer wire element can range from 1.5 mm to 4 mm in diameter. In some implementations, the diameter of the tracer wire element is 1.5 mm to 7 mm. In some implementations, the diameter of the tracer wire is 5 mm to 6.5 mm. In some implementations, the diameter of the tracer wire element is 1 mm to 5 mm. In some implementations, the diameter of the tracer wire element is 1 mm to 4 mm. In some implementations, the diameter of the tracer wire element is 2 mm to 4 mm. In some implementations, the diameter of the tracer wire element is from 2 mm to 3 mm. In some implementations, the diameter of the tracer wire is from 3.5 m to 4.5 mm. In some implementations, the diameter of the tracer wire element is less than 4 mm or less than 5 mm.

The tracer wire element can comprise: a metallic wire configured to conduct an electrical signal for detection by an above ground signal detector; a protective coating formed over the metallic wire; an optional inner insulating jacket formed over the coated metallic wire; unidirectional fiber strands with a resin component for reinforcement; and an outer jacket covering the unidirectional fiber strands. In some implementations, the unidirectional fiber strands can be embedded in the resin component.

The tracer wire element can be designed and produced to provide various parameters and properties. For example, the tracer wire element can be used for micro duct and micro fiber cables. A micro duct is a small-diameter conduit, e.g., made of High-Density Polyethylene (HDPE) that houses micro fiber cables (e.g., small diameter cables such as optic fiber cables), providing a protective and flexible pathway for network installations, often installed using the less invasive method of micro-trenching to reduce costs and speed up deployment compared to traditional conduit systems. Micro ducts can be pre-installed or pushed into larger, empty ducts, offering future expansion capabilities, a smaller footprint, and reduced installation time for applications like Fiber-to-the-Home (FTTH) and long-haul networks.

The tracer wire element can be lightweight and flexible. The tracer wire element can be easy for a user to handle and install. The tracer wire element can be packaged on sturdy recyclable reels. The tracer wire element can provide conductor functions at a wide range of frequencies and can be compatible with standard locating equipment. The tracer wire can be fungus resistant. The tracer wire can pass standard water head tests. The tracer wire can easily connect to other electrical systems.

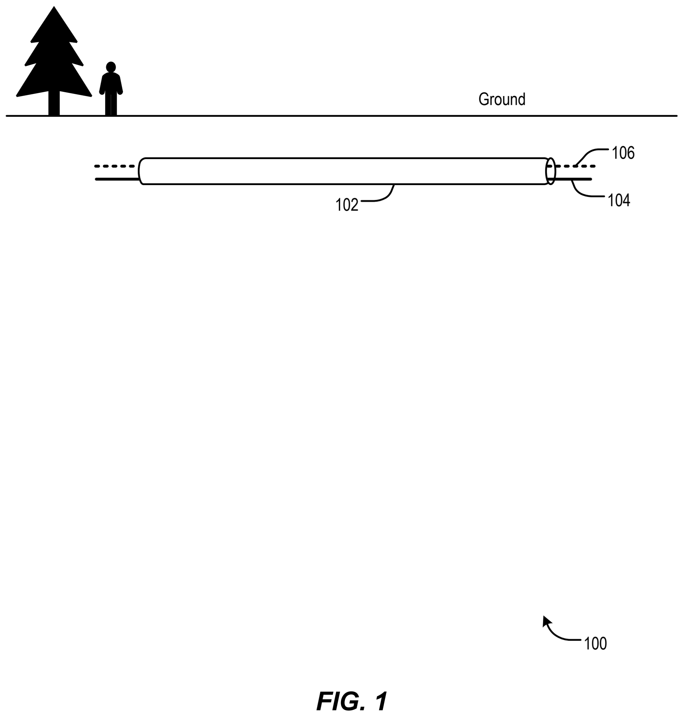

FIG 1 is an environmental overview of an application of a tracer wire element 104 in a buried micro-duct 102. The compact tracer wire element 104 is located within the buried micro-duct 102 adjacent to the fiber optic cable 106, enhancing the detection of the micro-duct 102 for installation, repair, and replacement of the fiber optic cable 106.

The tracer wire element 104 is constructed and arranged to serve as a detector for locating underground micro-ducts and other small diameter direct-bury applications. In micro-duct implementations, such as telecommunication lines, the micro-duct 102 houses the fiber optic cables 106 and the tracer wire element 104. In direct-bury applications, the tracer wire element is buried alongside the utility line.

The tracer wire element 104 may also be used in other underground tracing and detection applications, including detection of underground utility delivery lines, such as cable (e.g., electricity, television, internet, etc.), gas, electrical, water and sewage delivery lines. These cables can be direct-buried or housed in compact micro-ducts, both implementations requiring the use of tracer wire elements. The compact nature of the present disclosure allows for ease of installation and removal from micro-ducts and provides very precise dimensional control. The disclosure is not limited to the usages described herein and the tracer wire element and methods for making the same may be used with any of a variety of underground detection applications.

In accordance with one aspect of the present disclosure, provided is an apparatus for manufacturing a tracer wire element. In accordance with the apparatus there is provided an elongated forming tool including an input base into which one or more unidirectional fibers (e.g., one or more yarns) is fed. The elongated forming tool also includes an outlet member downstream of the input base defining a restricted passage for receiving the metal wire material and the plurality of unidirectional fibers.

In some implementations, an apparatus receives an inner insulation jacket that is positioned over the metal wire material before the yarns are received and resin is extruded. For example, the strands can be embedded in the resin.

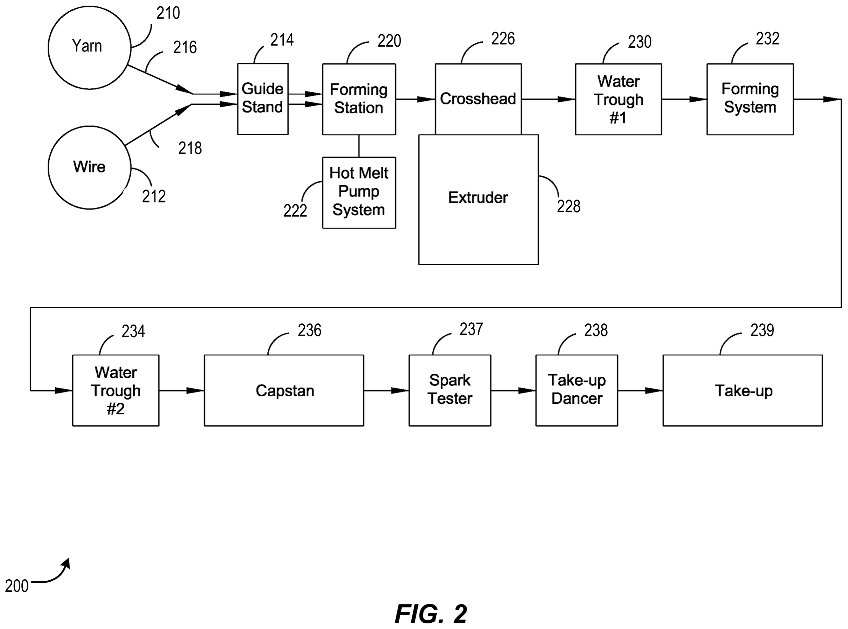

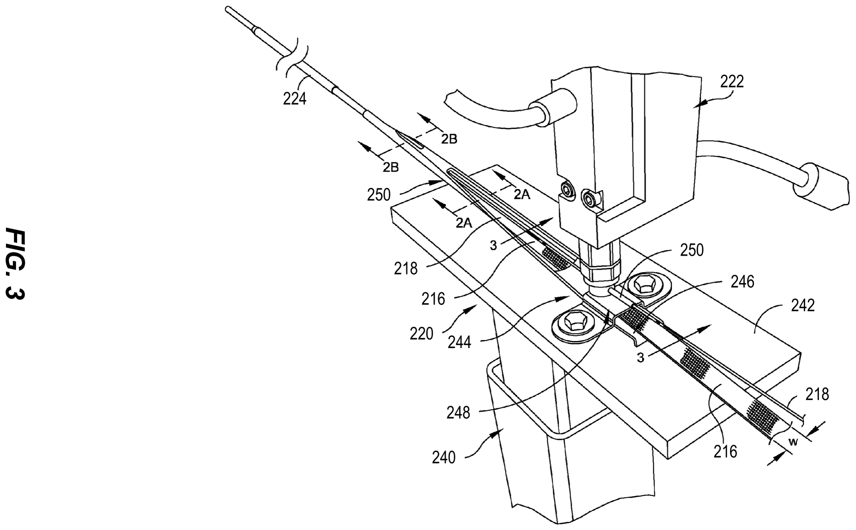

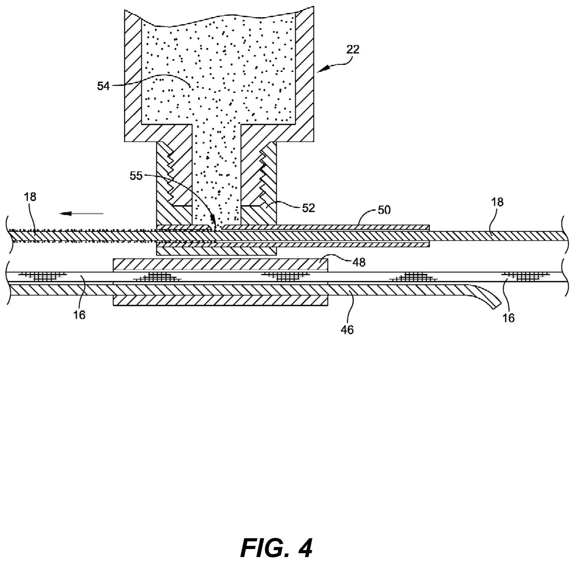

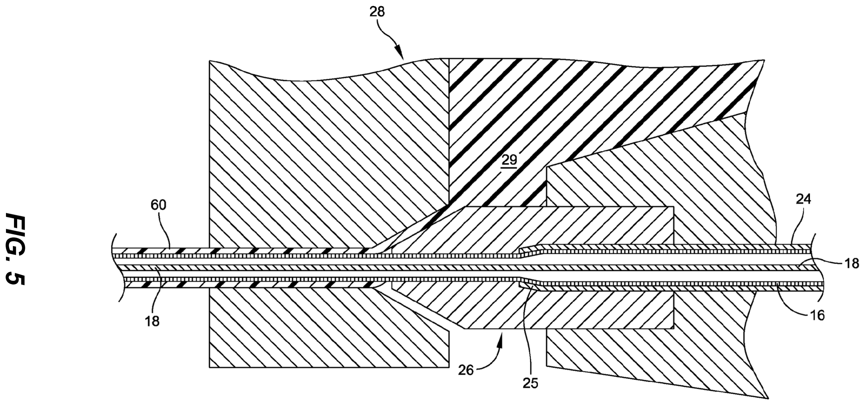

FIG 2 is an illustration in block diagram form of a system 200 used in producing the tracer wire element of the present disclosure. FIG 3 illustrates the forming station 300 wherein the one or more unidirectional fibers (e.g., one or more yarns) is formed about the wire element. FIG 4 further illustrates the use of a resin component about the wire. FIG 5 illustrates the extrusion process wherein a cover is formed about the tracer wire element to form the final outer layer of the tracer wire element.

With further reference to the block diagram of FIG. 2, a pair of payoff devices at the beginning of the process are illustrated as yarn strand material payoff 210 and wire payoff 212. Both of these payoffs may be in the form of a spool that contains either the yarn material or the wire for delivery to a guide stand 214. The guide stand 214 may be considered as a device that separately guides the yarn material 216 (e.g., a single strand of yarn material, multiple strands of yarn material, a combination of yarn material and other material, etc.) and wire 218. The yarn material can include synthetic fibers and can include polyester, nylon, aramid, and/or carbon. The yarn material can include naturally occurring fibers and can include cotton, wool, flax, silk, and/or hemp. The yarn material can include both natural and synthetic fibers. From the guide stand 14 the yarn material and wire are directed to forming station 220. Also illustrated in FIG. 2 is a hot melt pump system 222 that is adapted to deliver a small amount of a resin component to the element as described hereinafter in the cross-sectional view of FIG. 4.

After the yarn material has been formed about the wire, a guide tube 224 (see FIGS. 4 and 5) guides the tracer wire element to a crosshead 226 associated with extruder 228. In this regard reference may also be made to FIG. 5 that provides somewhat more detail of the crosshead 226 and extruder 228.

With further reference to the block diagram of FIG. 2, the tracer wire element then advances to a first water trough 230 for initial cooling of the element and from there to a further forming system 232.

In connection with the forming system 232, reference will be made hereinafter to FIGS. 5.

From the forming system 232, the tracer wire element progresses to a second water trough 234 and from there to a capstan 236 that maintains a pulling drive for the element being manufactured. FIG. 2 also illustrates in the block diagram a spark tester 237, a take-up dancer 238 and a final take-up 239 upon which the completed the element is stored. The final take-up 239 may be a spool.

Reference is now made to the perspective view of FIG. 3 which shows the forming station 220 as well as the hot melt pump system 222. The forming station 220 may include some type of pedestal 240 that, in turn, supports a base plate 242. Secured to the base plate 242 is the forming tool 244 of the present disclosure. The forming tool 244 includes an input base 46 upon which the yarn material 216 rests. The perspective view of FIG. 3 illustrates the yarn material 216 progressing over the base 246. FIG. 3 also illustrates an overlying member 48 that also assists in guiding the yarn material 216.

The perspective view of FIG. 3 also illustrates the wire 218. The wire 218 may be an uncoated metal wire or a wire with an insulated outer coating. In either case, the wire 218 is shown fed over the guide member 248 into a guide tube 250 so that the wire can have an application of a resin component applied thereto. The resin component, in addition to helping to hold the wire 218 in place during manufacturing of the element, also has been found to have cushioning and force absorption attributes due to its resiliency, thus protecting the tracer wire element from damage, to be discussed in detail below. The yarn material can be embedded in the resin material. The wire 218 then progresses to the outlet member portion of the forming tool essentially at the center thereof so that the yarn material can be laid about the wire.

Reference is now made to the cross-sectional view of FIG.4 which is taken along line 3-3 of FIG. 3. This cross-sectional view illustrates further details of the forming tool; and more particularly, of the hot melt pump system 222. The hot melt pump system is believed to be unique. Thus, in FIG. 4 there is illustrated a head 252 of the hot melt system or gun. FIG. 4 also illustrates the liquid resin component at 254 being dispensed at an outlet port 255 of the head 252. It is noted that the inlet tube 250 guides the wire to the port 255 where a small amount of resin component is applied about the entire diameter of the wire. This resin component will assist at a later stage at the outlet of the forming tool to provide at least a partial retaining of the wire relative to the yarn material that is laid thereabout. For example, the resin component can hold the yarn material in place and provide additional reinforcement to the tracer wire element. In some implementations, the resin component comprises an ethylene vinyl acetate (EVA) copolymer or other synthetic copolymer. The resin component adheres to the outer jacket material, the yarn material, and the wire surface. In some implementations, the resin can be blended with additional fillers (e.g., pigments, talc, clay, silica, mica, calcium carbonate, woven materials, microplastics, waxes, carbon fibers, carbon nanofibers, carbon nanotubes, glass fibers and beading) and/or additives (dispersants, adhesion promoters, anti-statics, flame retardants, lubricants, plasticizers, catalysts, cross-linkers, and stabilizers) to alter the properties of the resin and/or the tracer wire element. For example, the fillers and/or additives can be pre-blended with the resin component or can be added directly.

As discussed above, in some implementation, an apparatus positions an inner insulation jacketing over the wire before the one or more unidirectional fibers (e.g., yarns) are laid in and the resin is extended.

Reference is also now made to a sectional view taken at the extruder 28. FIG. 5 also illustrates the guide tube 24 that maintains the element in a substantially circular configuration. The guide tube 24 may have an outlet restriction illustrated at 25 in FIG. 5. The tube 24 may terminate at a location just upstream of the location where the extruded material is deposited about the tracer wire element. FIG. 4 illustrates the extruded material at 29 being delivered about the formed element. This thus forms an outer jacket 60 as illustrated in FIG. 5. The outer jacket 60 may be disposed about the entire circumference of the tracer wire element.

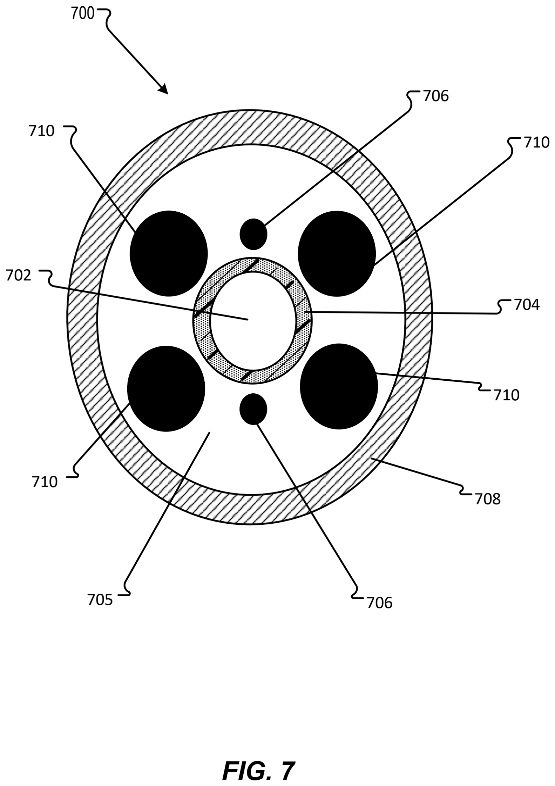

The shape of the tracer wire element may be an oval shape as illustrated in the cross-sectional view of FIG. 7. The innermost portion of the tracer wire element 700 is the metallic wire 702 with a coating (e.g., a tin coating) 704 plating the metallic wire. The metallic wire 702 can include solid wire, strands of wires, twisted strands of wires, etc. As described above, unidirectional fiber strands may surround the metallic wire with a resin component 705. The resin component 705 can include a hot-melt resin that holds the unidirectional fiber strands in place and provides additional reinforcement. The resin component can adhere the outer insulating jacket 708 to the metallic wire 702 with the protective coating 704.

The unidirectional fiber strands may include water-blocking yarn strands 706 and non water-blocking yarn strands 710. For example, water blocking yarn can be considered a specialized yarn used in cables that absorbs moisture and swells to form a protective barrier (e.g., a protective gel barrier), protecting from damage. In some implementations, the water blocking yarn can include super-absorbent polymers (SAPs), other types of absorbing material, combinations of materials (e.g., SAPs in combination with other materials). The water blocking yarn generally provides both water protection and mechanical support. When water or moisture comes into contact with the yarn, the yarn absorbs the water. The absorbed water causes the yarn to swell. In this example, the swollen yarn creates a physical barrier, protecting from water penetration and protecting the internal components. In some implementations, the fibers can be treated or chemically functionalized to provide additional functionality, e.g., cut resistance, reactivity, etc.

Formed over the unidirectional fiber strands 706, 710 is an outer jacket 708 that further prevents damage to the tracer wire element 700. In some implementations, the outer jacket 708 comprises polyurethane, a thermos-plastic elastomer (TPE), a high-density polyethylene (HDPE), and/or polyvinyl chloride (PVC). In some implementations, the HDPE is abrasion resistant. In some implementations, the outer jacket can have a diameter of about 0.2 mm to about 2 mm. In some implementations, the outer jacket can have a diameter of about 0.35 mm to about 1.05 mm.

In some implementations, the water-blocking yarn strands 706 can include yarn strands that exhibit a threshold level of water-blocking capabilities. In some implementations, the water-blocking yarn strands 706 comprise a 330 denier yarn. In other implementations, the water-blocking yarn strands 706 can have other denier ranges. Yarn denier can be considered a unit of linear density used to measure the thickness and weight of yarn or fabric. A higher denier number indicates a thicker, heavier, and generally more durable yarn, while a lower denier number signifies a thinner, lighter, and often more delicate yarn.

In some implementations, there can be more or fewer water-blocking yarn strands 706. In some implementations, each water-blocking yarn strand 706 can exhibit the same water-blocking capabilities. In some implementations, the water-blocking capabilities of one water-blocking yarn strand can be different than the water-blocking capabilities of another water-blocking yarn strand. It is generally advantageous for each of the water-blocking yarn strands to exhibit the similar water-blocking capabilities to provide a generally uniform tracer wire element.

In some implementations, the non water-blocking yarn strands 710 can include yarn strands that exhibit below the threshold level of water-blocking capabilities (e.g., below the threshold level of the water-blocking yarn strands 706). In some implementations, the non water-blocking yarn strands 710 include a 2600 denier yarn. The non-water block strands provide have a larger denier (e.g., a larger illustrated diameter) and provide structure to the tracer element 700. In other implementations, the non water-blocking yarn strands 710 can have other denier ranges. In some implementations, the non water-blocking yarn strands 710 are stronger than the water-blocking yarn strands 706 and provide a greater amount of reinforcement. In some implementations, there can be more or fewer non water-blocking yarn strands 710. In some implementations, the non water-blocking yarn strands 710 can each be identical. In some implementations, the non water-blocking yarn strands 710 can be different from each other (e.g., have different denier ranges). It is generally advantageous for each of the non water-blocking yarn strands to be identical to provide a generally uniform tracer wire element.

In some implementations, all of the unidirectional fibers can be water-blocking yarn strands. In some implementations, there can be more or fewer unidirectional fibers. For example, a greater number of unidirectional fibers provides greater reinforcement. However, a greater number of unidirectional fibers increases manufacturing complexity and increases the size of the tracer wire element. A lesser number of unidirectional fibers is easier to manufacture and deceases the diameter of the tracer wire element. The number of unidirectional fibers can be designed accordingly to provide a desired diameter balanced with sufficient reinforcement and stability. Also, the ratio of water-blocking fibers to non water-blocking fibers can be designed to provide a desired amount of water-blocking capabilities balanced with sufficient reinforcement and stability.

The unidirectional fibers are also spaced apart within the resin component 705. The unidirectional fibers can also have different spacing in other implementations. In some implementations, there can be a greater distance between the unidirectional fibers. In other implementations, there can be a lesser distance between the unidirectional fibers. In some implementations, the spacing can vary with the number of unidirectional fibers. In some implementations, at least some of the unidirectional fibers can contact each other.

The unidirectional fibers can comprise non-woven fibers. For example, the unidirectional fibers can include yarn fibers that extend along the tracer wire element. In some implementations, the unidirectional fibers can spiral along the tracer wire element, e.g., in a clockwise or counter-clockwise fashion. In some implementations, the unidirectional fibers do not spiral and instead extend straight along the tracer wire element (e.g., parallel with the tracer wire element). In some implementations, the unidirectional fibers can be braided. For example, a first portion of the tracer wire element can include unidirectional fibers spiraling along the first portion, and a second portion of the tracer wire element can include unidirectional fibers not spiraling (e.g., extending straight) along the second portion. In some implementations, a first portion of the tracer wire element can include woven fibers and a second portion of the tracer wire element can include non-woven fibers (e.g., spiraling non-woven fibers are straight non-woven fibers). In some implementations, the tracer wire element can include woven fibers.

In some implementations, a portion (or all) of the equipment in FIG. 3 can be employed to produce tracer wire element 700 that includes unidirectional fiber strands 706. For example, the equipment can be used to control one or more parameters of the tracer wire element 700, e.g., the outer diameter of the tracer wire element 700. The equipment can also control the positioning of the unidirectional fiber strands 706, 710 within the tracer wire element 700. Use of the equipment can prevent bunching up of the materials used while having the center metallic wire 702 properly positioned within the tracer wire element 700. The resin component 705 applied to the wire also assists in maintaining the relative position between the center conductor wire 702 and the unidirectional fiber strands 706, 710. Moreover, by applying the jacket 708 soon after the forming the other portions (e.g., the unidirectional fiber strands 706, 710 and metallic wire 702) can assist with providing an effective and uniform tracer wire element.

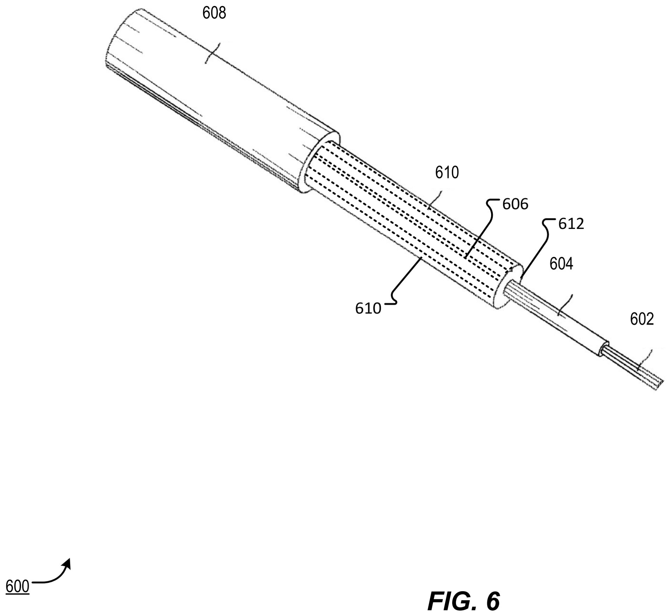

The perspective view of FIG. 6 illustrates the overall structure of a tracer wire element 600.

The tracer element includes a metallic wire 602 disposed within unidirectional fiber strands 606, 610. In some embodiments, the metallic wire 602 may include one or more of the following features. The metallic wire 602 may be a solid wire or a stranded wire. The wire 602 may define a gauge in a range from about 5 AWG (American wire gauge) to about 32 AWG. The wire 602 may define a gauge in a range from about 8 AWG to about 32 AWG. The wire 602 may define a gauge in a range from about 18 AWG to about 20 AWG. The wire 602 may define a gauge of 19 AWG. The metallic wire 602 may include copper, aluminum, one or more metallic compounds, or any other metal suitable for conducting electrical current. The metallic wire 602 may include a protective coating 604 disposed along an exterior surface of the wire. In some implementations, the wire 602 may comprise one or more electrical conducting materials (e.g., a solid copper wire). The disclosure is not limited in this respect and envisions that the metallic wire 602 can be constructed of any metal, combination of metals, metal alloys, or metallic compounds that are suitable for conducting electrical current.

In some implementations, the metallic wire 602 at the center includes a copper conductor. In some implementations, the copper conductor is a 19 AWG solid wire conductor. The copper wire 602 provides the tracer wire element 600 with better conductivity as signals travel along a middle and/or center of the wire. Therefore, the frequency currents can be carried consistently and strongly to enable detection of the tracer wire element 600. Without being limited to a particular theory, the characteristics and rationale for such a size conductor (rather than the more usual e.g., 12 AWG conductor) are as follows. A 19 AWG conductor provides better performance in a number of ways. First, it has been found that in an industry standard lightning damage test, such as TIA/EIA 455-81-92, that the 19 AWG conductor, when struck by low and high intensity lightning strikes vaporized, leaving no path for electric current to travel down the line and potentially electrocute a person working near the conduit. In instances in which a 10 or 12 AWG was used, it was found that those wires remained intact upon being hit by lightning, with the potential electrocution injuries attendant thereto. Second, it has been found that using 19 AWG provides better signal strength. If a transmitter puts out the same amount of energy on a larger diameter wire as a smaller diameter wire, then relative to the receiver of the energy the small conductor will possess a higher signal strength than the large conductors so that detection is easier. For example, in one test, a tracer wire element made in accordance with the present disclosure provided a 720 kHz reading whereas a more traditional 12 or 14 AWG wire provided a reading of 415 kHz or 435 kHz.

A protective coating 604 may be placed over the wire 602 to prevent corrosion. The protective coating provides additional surface passivation and protection. This protective coating 604 may be a metal coating. In some implementations, the metal coating includes e.g., tin, silver, nickel, or zinc coatings. In some implementations, over a copper wire 600 tin is plated 604 on the copper wire's exterior surface to provide corrosion resistance. The coating 604 can include tin and related impurities and coats the wire 602 by any of a number of methods well known in the art.

In some implementations, the tracer wire element 600 may include unidirectional fiber strands 606, 610 surrounding the metallic wire 602. The unidirectional fiber strands 606, 610 are illustrated in dashed lines because the unidirectional fiber strands 606, 610 are embedded in the resin component. The unidirectional fiber strands 606 can be water-blocking yarn strands (e.g., similar to the water-blocking yarn strands 706 of FIG. 7). The unidirectional fiber strands 610 can be non water-blocking yarn strands (e.g., similar to the non water-blocking yarn strands 710 of FIG. 7). Other materials, structures, etc. can be employed with unidirectional fiber strands and a metallic wire; for example one or more woven materials can be to produce a tracer wire element.

In some implementations, the fiber strands may include non-metallic fiber strands including but not limited to synthetic fiber strands such as polyester fiber strands and filaments. The non-metallic fiber strands are non-conductive, or non-electrically conductive or non-electrically shielding.

Synthetic fiber strands and filaments of the unidirectional fiber strands 606, 610 may include, but are not limited to, polyethylene terephthalate (PET), polyester, polyethylene, nylon, water block, or polypropylene fibers and any combination thereof, which are suitable for providing strength and resistance to the composite. The disclosure is not limited in this respect and envisions that other synthetic or non-synthetic fibers may construct the unidirectional fiber strands.

In some implementations, the unidirectional fiber strands may include yarn fiber strands, such as polyester yarn fiber strands and water block yarn fiber strands. Water-blocking yarn fiber strands may be included to enhance protection of the copper wire 602. When the material encounters water underground, the water block yarn fiber strands swell to form a protective barrier. In this regard, the barrier effectively prevents water ingress, preserving the integrity of the wire 602 from water damage, corrosion and other damages accrued from being underground.

The deniers of the unidirectional yarn strands may be from 200 denier to 5500 denier, 250 denier to 5000 denier, 250 denier to 4500 denier, 250 denier to 4000 denier, 250 denier to 3500 denier, or 300 denier to 3000 denier. For example, the deniers of the unidirectional yarn strands are 330 denier, 2600 denier, or a combination thereof.

In some implementations, the tracer wire element may include one or more yarn strands, e.g., 2 to 10 yarn strands, 2 to 8 yarn strands, or 2 to 7 yarn strands. For example, the tracer wire element includes 2, 3, 4, 5, 6, 7, 8, 9, or 10 yarn strands. For example, the tracer element includes 6 yarn strands. In some implementations, the yarn strands may include 4 strands of 2600 denier polyester yarn and 2 strands of 330 denier water block yarn. In some implementations, the yarn strands may include 4 strands of 2600 denier polyester yarn and 2 strands of 3000 denier water block yarn.

In some implementations, a resin component 612 binds the fibers together to maintain the structural integrity of unidirectional fiber strands as well as ensures that the stress on the fiber-reinforced composite is evenly spread. In some embodiments, the resin component 612 may be comprised of ethylene vinyl acetate copolymer (EVA) or other synthetic copolymers. Generally, EVA is softer and more flexible than other polymers. This characteristic contributes to the compact nature of the tracer wire element, allowing the tracer wire element to be applicable to micro-duct and other small diameter utility lines. EVA also provides durability and resistance to environment factors, such as chemicals, further protecting the metallic wire against damage. In some implementations, the fibers can be completely embedded in the resin component 612. In some implementations, the fibers can be partially embedded in the resin component 612. In some implementations, some of the fibers can be completely embedded in the resin component 612 and other fibers can be partially embedded in the resin component 612. In some implementations, embedding the fibers partially in the resin component 612 allows the fibers to expand (e.g., when absorbing water).

In some implementations, the tracer element 600 may further include an outer jacket 608 disposed along the external surface of the resin component 612, such that the tracer element 600 is encased or enclosed within the outer jacket 608. Surrounding the entirety of the resin component 612, the outer jacket 608 helps provide an impact resistant and protective jacket to the underlying wire and to help further minimize or prevent corrosion of the wire 602. The outer jacket 608 also provides cut resistance and protective properties as well as to help to impact or to maintain the deformable and/or flexible properties of the tracer element 600.

The outer jacket 608 is constructed of one or more non-fibrous materials suitable to permit the jacket 608 to deform at a site of impact or applied force along the jacket 208. In some embodiments, the outer jacket 608 is constructed out of high-density polyethylene (HDPE). The ability of the jacket 608 to deform at the impact site helps the jacket 608 to absorb such impact or force and helps to eliminate or at least reduce splitting on the jacket 608 The outer jacket 608 provides insulation and impact-resistance to the underlying wire and is cut resistant to protect the underlying wire 602 from damage.

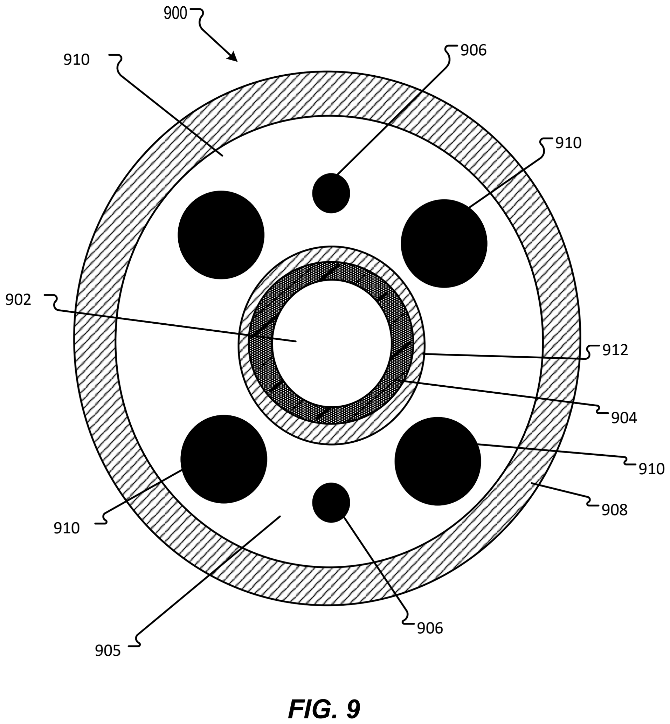

Another embodiment of a tracer wire element 900 is illustrated in the cross-sectional view of FIG. 9. The innermost portion of the tracer wire element 900 is the metallic wire 902 with a protective coating 904 (e.g., a tin coating) plating the metallic wire. An inner jacket 912 surrounds the protective coating 904. The inner jacket 912 can protect the protective coating 904. For example, in some implementations, the inner jacket 912 comprises a high-density polyethylene (HDPE). In some implementations, the HDPE is abrasion resistant. For example, in some implementations, a user may desire to strip the tracer wire element down to the inner jacket 912. For example, a user may strip the tracer wire element down to the inner jacket 912 to connect the tracer wire element to an electrical connection. The tracer wire element can be electrically connected to electrical connections without stripping the tracer wire element, but providing an inner jacket 912 gives the user the option to strip the tracer wire element or not.

As described above, unidirectional fiber strands 906, 910 may surround the metallic wire with a resin component 905. The resin component 905 can include a hot-melt resin that holds the unidirectional fiber strands in place and provides additional reinforcement. In some implementations, the resin component comprises an ethylene vinyl acetate (EVA) copolymer or other synthetic copolymer. The unidirectional fiber strands may include water-blocking yarn strands 906 and non water-blocking yarn strands 910. Formed over the unidirectional fiber strands 906, 910 is an outer jacket 908 that further prevents damage to the tracer wire element 900. In some implementations, the outer jacket 908 comprises polyurethane, a thermos-plastic elastomer (TPE), a high-density polyethylene (HDPE), and/or polyvinyl chloride (PVC). In some implementations, the HDPE is abrasion resistant. In some implementations, the outer jacket can have a diameter of about 0.2 mm to about 2 mm. In some implementations, the outer jacket can have a diameter of about 0.35 mm to about 1.05 mm.

In some implementations, the water-blocking yarn strands 906 can include yarn strands that exhibit a threshold level of water-blocking capabilities, as discussed above (e.g., similar to water-blocking yarn strands 706 of FIG. 7). In some implementations, the water-blocking yarn strands 906 comprise a 330 denier yarn. In other implementations, the water-blocking yarn strands 906 can have other denier ranges. In some implementations, there can be more or fewer water-blocking yarn strands 906. In some implementations, each water-blocking yarn strand 906 can exhibit the same water-blocking capabilities. In some implementations, the water-blocking capabilities of one water-blocking yarn strand can be different than the water-blocking capabilities of another water-blocking yarn strand. It is generally advantageous for each of the water-blocking yarn strands to exhibit the same water-blocking capabilities to provide a generally uniform tracer wire element.

In some implementations, the non water-blocking yarn strands 910 can include yarn strands that exhibit below the threshold level of water-blocking capabilities (e.g., below the threshold level of the water-blocking yarn strands 906). In some implementations, the non water-blocking yarn strands 910 include a 2600 denier yarn. In other implementations, the non water-blocking yarn strands 910 can have other denier ranges. In some implementations, the non water-blocking yarn strands 910 are stronger than the water-blocking yarn strands 906 and provide a greater amount of reinforcement. In some implementations, there can be more or fewer non water-blocking yarn strands 910. In some implementations, the non water-blocking yarn strands 910 can each be identical. In some implementations, the non water-blocking yarn strands 910 can be different from each other (e.g., have different denier ranges). It is generally advantageous for each of the non water-blocking yarn strands to be identical to provide a generally uniform tracer wire element.

In some implementations, all of the unidirectional fibers can be water-blocking yarn strands. In some implementations, there can be more or fewer unidirectional fibers. For example, a greater number of unidirectional fibers provides greater reinforcement. However, a greater number of unidirectional fibers increases manufacturing complexity and increases the size of the tracer wire element. A lesser number of unidirectional fibers is easier to manufacture and deceases the diameter of the tracer wire element. The number of unidirectional fibers can be designed accordingly to provide a desired diameter balanced with sufficient reinforcement and stability. Also, the ratio of water-blocking fibers to non water-blocking fibers can be designed to provide a desired amount of water-blocking capabilities balanced with sufficient reinforcement and stability.

The unidirectional fibers are also spaced apart within the resin component 905. The unidirectional fibers can also have different spacing in other implementations. In some implementations, there can be a greater distance between the unidirectional fibers. In other implementations, there can be a lesser distance between the unidirectional fibers. In some implementations, the spacing can vary with the number of unidirectional fibers. In some implementations, at least some of the unidirectional fibers can contact each other.

The unidirectional fibers comprise non-woven fibers. For example, the unidirectional fibers can include yarn fibers that extend along the tracer wire element. In some implementations, the unidirectional fibers can spiral along the tracer wire element. In some implementations, the unidirectional fibers do not spiral and instead extend straight along the tracer wire element. In some implementations, a first portion of the tracer wire element can include unidirectional fibers spiraling along the first portion, and a second portion of the tracer wire element can include unidirectional fibers not spiraling (e.g., extending straight) along the second portion. In some implementations, a first portion of the tracer wire element can include woven fibers and a second portion of the tracer wire element can include non-woven fibers (e.g., spiraling non-woven fibers are straight non-woven fibers). In some implementations, the unidirectional fibers comprise woven fibers.

In some implementations, a portion (or all) of the equipment in FIG. 3 can be employed to produce tracer wire element 900 that includes unidirectional fiber strands 906. For example, the equipment can be used to control one or more parameters of the tracer wire element 900, e.g., the outer diameter of the tracer wire element 900. The equipment can also control the positioning of the unidirectional fiber strands 906, 910 within the tracer wire element 900. Use of the equipment can prevent bunching up of the materials used while having the center metallic wire 902 properly positioned within the tracer wire element 900. The resin component 905 applied to the wire also assists in maintaining the relative position between the center conductor wire 902 and the unidirectional fiber strands 906. Moreover, by applying the jacket 908 soon after the forming the other portions (e.g., the unidirectional fiber strands 906, 910 and metallic wire 902) can assist with providing an effective and uniform tracer wire element.

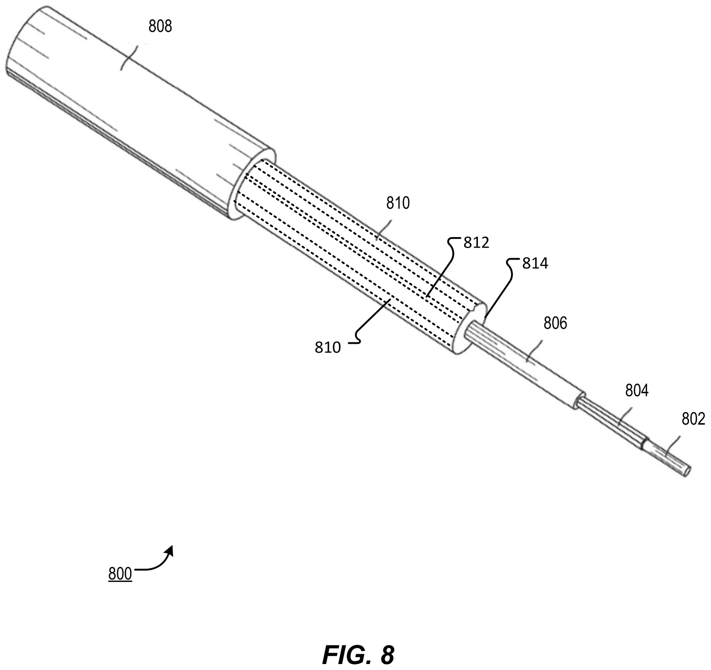

The perspective view of FIG. 8 illustrates the overall structure of an embodiment of a tracer wire element 800.

The tracer element includes a metallic wire 802 disposed within unidirectional fiber strands 810, 812. In some embodiments, the metallic wire 802 may include one or more of the following features. The metallic wire 802 may be a solid wire or a stranded wire. The wire 802 may define a gauge in a range from about 8 AWG (American wire gauge) to about 32 AWG. The metallic wire 802 may include copper, aluminum, one or more metallic compounds, or any other metal suitable for conducting electrical current. The metallic wire 802 may include a protective coating 804 disposed along an exterior surface of the wire. In some implementations, the wire 802 may comprise one or more electrical conducting materials (e.g., a solid copper wire). The disclosure is not limited in this respect and envisions that the metallic wire 802 can be constructed of any metal, combination of metals, metal alloys, or metallic compounds that are suitable for conducting electrical current.

In some implementations, the metallic wire 802 at the center includes a copper conductor. In some implementations, the copper conductor is a 19 AWG solid wire conductor. The copper wire 802 provides the tracer wire element 800 with better conductivity as signals travel along a middle and/or center of the wire. Therefore, the frequency currents can be carried consistently and strongly to enable detection of the tracer wire element 800.

A protective coating 804 may be placed over the wire 802 to prevent corrosion. This protective coating 804 may be a metal coating. In some implementations, the metal coating includes e.g., tin, silver, nickel, or zinc coatings. In some implementations, over a copper wire 800 tin is plated 804 on the copper wire's exterior surface to provide corrosion resistance. The coating 804 can include tin and related impurities and coats the wire 802 by any of a number of methods well known in the art.

In some implementations, the tracer wire element 800 includes an inner jacket 806 surrounding the protective coating 804. For example, in some implementations, the inner jacket 806 comprises a high-density polyethylene (HDPE). In some implementations, the HDPE is abrasion resistant. For example, in some implementations, a user may desire to strip the tracer wire element down to the inner jacket 806. For example, a user may strip the tracer wire element down to the inner jacket 806 to connect the tracer wire element to an electrical connection. The tracer wire element can be electrically connected to electrical connections without stripping the tracer wire element, but providing an inner jacket 806 gives the user the option to strip the tracer wire element or not.

In some implementations, the tracer wire element 800 may include unidirectional fiber strands 810, 812 surrounding the metallic wire 802. The unidirectional fiber strands 810, 812 are illustrated in dashed lines because the unidirectional fiber strands 810, 812 are embedded in the resin component. The unidirectional fiber strands 812 can be water-blocking yarn strands (e.g., similar to the water-blocking yarn strands 706 of FIG. 7). The unidirectional fiber strands 810 can be non water-blocking yarn strands (e.g., similar to the non water-blocking yarn strands 710 of FIG. 7). Other materials, structures, etc. can be employed with unidirectional fiber strands and a metallic wire; for example one or more woven materials can be to produce a tracer wire element.

In some implementations, the fiber strands may include non-metallic fiber strands including but not limited to synthetic fiber strands such as polyester fiber strands and filaments. The non-metallic fiber strands are non-conductive, or non-electrically conductive or non-electrically shielding.

Synthetic fiber strands and filaments of the unidirectional fiber strands 810, 812 may include, but are not limited to, polyethylene terephthalate (PET), polyester, polyethylene, nylon, water block, or polypropylene fibers and any combination thereof, which are suitable for providing strength and resistance to the composite. The disclosure is not limited in this respect and envisions that other synthetic or non-synthetic fibers may construct the unidirectional fiber strands.

In some implementations, the unidirectional fiber strands may include yarn fiber strands, such as polyester yarn fiber strands and water block yarn fiber strands. Water-blocking yarn fiber strands may be included to enhance protection of the copper wire 802. When the material encounters water underground, the water block yarn fiber strands swell to form a protective barrier.

The deniers of the unidirectional yarn strands may be from 100 to 6000 denier, 200 denier to 5500 denier, 250 denier to 5000 denier, 250 denier to 4500 denier, 250 denier to 4000 denier, 250 denier to 3500 denier, or 300 denier to 3000 denier. For example, the deniers of the unidirectional yarn strands are 330 denier, 2600 denier, or a combination thereof.

In some implementations, the tracer wire element may include one or more yarn strands, e.g., 2 to 10 yarn strands, 2 to 8 yarn strands, or 2 to 7 yarn strands. For example, the tracer wire element includes 2, 3, 4, 5, 6, 7, 8, 9, or 10 yarn strands. For example, the tracer element includes 6 yarn strands. In some implementations, the yarn strands may include 4 strands of 2600 denier polyester yarn and 2 strands of 330 denier water block yarn. In some implementations, the yarn strands may include 4 strands of 2600 denier polyester yarn and 2 strands of 330 denier water block yarn.

In some implementations, a resin component 814 binds the fibers together to maintain the structural integrity of unidirectional fiber strands as well as ensures that the stress on the fiber-reinforced composite is evenly spread. In some embodiments, the resin component may be comprised of ethylene vinyl acetate copolymer (EVA) or other synthetic copolymers. EVA is softer and more flexible than other polymers. This characteristic contributes to the compact nature of the tracer wire element, allowing the tracer wire element to be applicable to micro-duct and other small diameter utility lines. EVA also provides durability and resistance to environment factors, such as chemicals, further protecting the metallic wire against damage. In some implementations, the fibers can be completely embedded in the resin component 814. In some implementations, the fibers can be partially embedded in the resin component 814. In some implementations, some of the fibers can be completely embedded in the resin component 814 and other fibers can be partially embedded in the resin component 814. In some implementations, embedding the fibers partially in the resin component 814 allows the fibers to expand (e.g., when absorbing water).

In some implementations, the tracer element 800 may further include an outer jacket 808 disposed along the external surface of the resin component 814, such that the tracer element 800 is encased or enclosed within the outer jacket 808. Surrounding the entirety of the resin component 814, the outer jacket 808 helps provide an impact resistant and protective jacket to the underlying wire and to help further minimize or prevent corrosion of the wire 802. The outer jacket 808 also provides cut resistance and protective properties as well as to help to impact or to maintain the deformable and/or flexible properties of the tracer element 800.

The outer jacket 808 is constructed of one or more non-fibrous materials suitable to permit the jacket 808 to deform at a site of impact or applied force along the jacket 808. In some embodiments, the outer jacket 808 is constructed out of high-density polyethylene (HDPE). The ability of the jacket 808 to deform at the impact site helps the jacket 808 to absorb such impact or force and helps to eliminate or at least reduce splitting on the jacket 808. The outer jacket 808 provides insulation and impact-resistance to the underlying wire and is cut resistant to protect the underlying wire 802 from damage.

Other embodiments are within the scope of the following claims.

## Claims

1. A tracer wire element comprising:
a metallic wire configured to conduct an electrical signal for detection by an aboveground signal detector;
a protective coating formed over the metallic wire;
unidirectional fiber strands with a resin component reinforcement; and
an outer jacket covering the unidirectional fiber strands.

2. The tracer wire element of claim 1, wherein the diameter of the tracer wire element is 1mm to 5mm, 1.5mm to 4mm, 2mm to 4mm, less than 4mm, less than 5mm.

3. The tracer wire element of claim 1 or claim 2, wherein the metallic wire is a copper wire, and optionally wherein the copper wire has a gauge size of 8 AWG to 32 AWG.

4. The tracer wire element of any preceding claim, wherein the unidirectional fiber strands are flexible, cut-resistant, water swellable, or a combination thereof.

5. The tracer wire element of any preceding claim, wherein the unidirectional fiber strands comprise yarn strands.

6. The tracer wire element of claim 5, wherein the deniers of the yarn strands are 100 to 6000 denier, 200 to 5500 denier, 250 to 5000 denier, 250 to 4500 denier, 250 denier to 4000 denier, 250 denier to 3500 denier, or 300 denier to 3000 denier.

7. The tracer wire element of claim 5 or claim 6, wherein the plurality of yarn strands comprise two to ten yarn strands, two to eight yarn strands, or two to seven yarn strands.

8. The tracer wire element of any preceding claim, wherein the resin component is formed using a hot melt pump, and optionally wherein the resin component is an ethylene vinyl acetate (EVA) copolymer.

9. The tracer wire element of any preceding claim, wherein the outer jacket is a high-density polyethylene jacket, and optionally wherein the high-density polyethylene jacket is abrasion resistant.

10. The tracer wire element of any preceding claim, wherein the outer jacket is 0.015 inches to 0.04 inches in thickness.

11. The tracer wire element of any preceding claim, wherein the cross section of the tracer wire element is circular or oval.

12. The tracer wire element of any preceding claim, further comprising an inner insulating jacket formed between the coated metallic wire and under the unidirectional fiber strands, and optionally wherein the inner jacket is a high-density polyethylene jacket.

13. The tracer wire element of claim 12, wherein the inner jacket is 0.004 inches to 0.008 inches in thickness.

14. The tracer wire element of any preceding claim, wherein the protective coating formed over the wire comprises a metal coating comprising tin, silver, nickel, and/or zinc.

15. The tracer wire element of any preceding claim, wherein the plurality of fibers includes at least one of: polyethylene terephthalate (PET), polypropylene, polyethylene, and nylon.
